# EUROPEAN PATENT APPLICATION

(11) **EP 4 645 560 A1**
(43) Date of publication of application: **05.11.2025**
(21) Application number: 23912219.5
(22) Date of filing: 27.12.2023
(51) Int. Cl.: H01M 50/293, H01M 50/249

(54) **PARTITION MEMBER AND BATTERY ASSEMBLY**

(30) Priority: 28.12.2022 JP 2022211158
(71) Applicant: Mitsubishi Chemical Corporation, Tokyo 100-8251 (JP)
(72) Inventor: NINOMIYA, Naoya, Tokyo 100-8251 (JP); HASHIMOTO, Kei, Tokyo 100-8251 (JP); KAWAI, Tomohiro, Tokyo 100-8251 (JP)
(74) Representative: Vossius & Partner Patentanwälte Rechtsanwälte mbB
(86) International application number: PCT/JP2023/046849
(87) International publication number: WO 2024/143441

(57) **Abstract**

The present invention provides a partitioning member that partitions single cells in a battery assembly so as to readily suppress the generation of condensed water inside the battery assembly.

A partitioning member 1 is configured by accommodating an encapsulating material 110 in a casing material 120. The encapsulating material 110 is formed by including a porous body, and the casing material 120 has a moisture permeability set to 1.0 × 10⁻³ to 5.0 × 10¹ g/m²/day in an environment of 40°C and 90% RH.

## Description

### TECHNICAL FIELD

The present invention relates to a partitioning member that is accommodated in a battery assembly to partition battery members, and to a battery assembly.

In recent years, use of secondary batteries as power sources for vehicles or the like has been rapidly increasing, and studies are being conducted to increase an energy density of secondary batteries in order to improve a degree of freedom when installing secondary batteries in limited spaces in the vehicles or the like and to increase a cruising distance per charge. Meanwhile, safety of secondary batteries tends to be inversely related to the energy density, and the safety tends to decrease as the energy density of secondary batteries increases. For example, in secondary batteries installed in electric vehicles with a cruising distance of several hundred kilometers, a surface temperature of the secondary batteries may exceed several hundred degrees Celsius to reach nearly 1,000 degrees Celsius if the batteries are damaged by overcharging, internal short-circuiting, or other causes.

Since a secondary battery used as a power source for vehicles or the like is generally used as a battery assembly composed of a plurality of single cells, if one of the single cells constituting the battery assembly is damaged and reaches the temperature range described above, the heat generated by the damaged cell may damage adjacent single cells, and the damage may spread to the entire battery assembly in a chain reaction. In order to prevent such a chain of damage between the single cells, various techniques have been proposed, such as providing a partitioning member between single cells to cool a damaged single cell, and providing a porous body as a partitioning member between single cells.

For example, there is a partitioning member whose heat resistance changes between normal and abnormal conditions (see Patent Literature 1).

In order to improve thermal insulation properties in case of abnormality, there is a partitioning member that contains a powdered inorganic material and a fibrous inorganic material and has a predetermined density (see Patent Literature 2).

There is also a partitioning member that uses a metal layer having high barrier properties as a casing material in order to retain stored liquid (see Patent Literature 3).

### CITATION LIST

### PATENT LITERATURE

Patent Literature 1: International Publication No. 2018/124231
Patent Literature 2: International Publication No. 2019/107560
Patent Literature 3: International Publication No. 2020/203646

### SUMMARY OF THE INVENTION

### PROBLEM TO BE SOLVED BY THE INVENTION

It has been pointed out that in battery assemblies (battery modules) that accommodate single cells, or in battery packs that have control circuits connected to them, fluctuations in internal humidity readily lead to the generation of condensed water, which may cause micro-short circuits and corrosion of metal parts, but the fact is that in conventional battery assemblies or battery packs, there are no measures in place to suppress the generation of condensed water from the perspective of partitioning members.

With respect to the conventional technology described above, the partitioning members described in Patent Literatures 1 and 2 have been studied primarily in terms of thermal insulation properties of encapsulating materials, and have not been studied in terms of the possibility of absorbing moisture from the outside or suitable combinations of casing materials and encapsulating materials for this purpose. In addition, the partitioning member described in Patent Literature 3 has been studied with a focus on retaining liquid for a long time, assuming that the liquid is retained therein, and is rather an invention that blocks the transfer of substances with the outside.

As described above, the moisture absorption properties of the partitioning member have not been sufficiently studied in the prior art.

In view of such problems with conventional technologies, an object of the present invention is to provide a partitioning member that readily suppresses the generation of condensed water, and a battery assembly including the partitioning member.

### MEANS FOR SOLVING PROBLEM

The present inventors, as a result of their diligent studies to solve the above problems, have found that a partitioning member having moisture absorption properties can be used as a means for controlling humidity in a battery assembly, and thus the present invention has been conceived.

Specifically, the present invention includes the following aspects for solving the above problems.
[1] A partitioning member including a casing material and an encapsulating material,
   wherein the encapsulating material contains a porous body, and
   the casing material has a moisture permeability of 1.0 × 10⁻³ to 5.0 × 10¹ g/m²/day in an environment of 40°C and 90% RH.
[2] The partitioning member according to [1], wherein the casing material and the encapsulating material are not bonded together.
[3] The partitioning member according to [1] or [2], wherein the partitioning member has a space that is not occupied by the encapsulating material in an inner space of the casing material under atmospheric pressure.
[4] The partitioning member according to any one of [1] to [3], wherein a volume ratio of the space not occupied by the encapsulating material to 100% by volume of the inner space of the casing material is 10% by volume to 70% by volume.
[5] The partitioning member according to any one of [1] to [4], wherein the partitioning member is sealed by the casing material.
[6] The partitioning member according to any one of [1] to [5], wherein the partitioning member absorbs moisture in atmospheric air.
[7] The partitioning member according to any one of [1] to [6], wherein a ratio of a mass of moisture contained in the encapsulating material to a total mass of the encapsulating material is 0.40 or less.
[8] The partitioning member according to any one of [1] to [7], wherein the porous body contains a fibrous inorganic material and a powdered inorganic material.
[9] The partitioning member according to any one of [1] to [8], wherein the casing material contains a thermoplastic resin.
[10] The partitioning member according to any one of [1] to [9], wherein the casing material contains at least one layer selected from the group consisting of an inorganic oxide layer and a metal oxide layer.
[11] The partitioning member according to any one of [1] to [10], wherein the casing material contains at least one layer selected from the group consisting of an inorganic oxide layer and a metal oxide layer, and the layer has a thickness of 0.01 to 1 µm.
[12] A battery assembly including the partitioning member according to any one of [1] to [11] and a single cell.
[13] A method of using the partitioning member according to any one of [1] to [11], including bringing the partitioning member into contact with moisture at a relative humidity of 5% or more.
[14] The method of using the partitioning member according to [13], including passing moisture through the partitioning member.
[15] The method of using the partitioning member according to [13] or [14], wherein the partitioning member, after absorbing moisture for 15 days in an environment of 40°C and 90% RH, retains the absorbed moisture for 24 hours or more in an environment of 60°C and 10% RH.

### EFFECT OF THE INVENTION

The partitioning member of the above embodiment is disposed in a battery assembly to partition battery members. By providing the partitioning member with permeability, it is possible to adequately suppress the humidity inside a battery pack, which readily suppresses the generation of condensed water.

### BRIEF DESCRIPTION OF DRAWINGS

FIG. 1 shows a structure of an example of a partitioning member according to an embodiment of the present invention.
FIG. 2 shows a cross-sectional view of the partitioning member shown in FIG. 1, sectioned along an A-A line.
FIG. 3 shows an example of a single cell.
FIG. 4 shows a front view of the single cell shown in FIG. 3.
FIG. 5 shows a side view of the single cell shown in FIG. 3.
FIG. 6 shows a top view of an example of a battery assembly.
FIG. 7 shows a schematic side view of the battery assembly shown in FIG. 6 with a side panel on the front side removed.

### MODE(S) FOR CARRYING OUT THE INVENTION

The following is a description of the present invention. The description of the embodiment shown in the following drawings is an example, and the present invention is not limited to the structures shown in the drawings.

### <Partitioning Member>

The partitioning member according to the embodiment of the present invention is a partitioning member that partitions single cells or a single cell and a member other than the single cell, and includes a casing material and an encapsulating material, wherein the encapsulating material contains a porous body. A ratio of a moisture content contained in the encapsulating material to a total mass of the encapsulating material is preferably 0.40 or less.

The porous body preferably contains a powdered inorganic material and a fibrous inorganic material.

The inclusion of the porous body described above in the partitioning member facilitates the retention of humidity at an appropriate level within a battery pack where the partitioning member is disposed.

In addition, the porous body can prevent significant reduction or loss of heat resistance and thermal insulation properties due to pressure applied to the partitioning member. In other words, the porous body in the partitioning that receives heat from one secondary battery can retain the desired heat resistance and thermal insulation properties, thereby blocking heat transfer to other secondary batteries or the like.

The partitioning member having the configuration described above can be provided such that the casing material and the encapsulating material are not bonded together.

Here, the phrase "the casing material and the encapsulating material are not bonded together" means that the interfaces between the inner surface of the casing material and the outer surface of the encapsulating material are not substantially bonded together, and that the encapsulating material is free to move within the casing material. In other words, it is preferable that the partitioning member is provided so as to have a space not occupied by the encapsulating material in an inner space of the casing material. Furthermore, it is preferable that a volume ratio of the space not occupied by the encapsulating material to 100% by volume of the inner space of the casing material under atmospheric pressure is 10% by volume to 70% by volume. From the viewpoint of achieving a balance with thermal insulation performance, it is more preferably 10% by volume to 60% by volume, even more preferably 10% by volume to 50% by volume, and particularly preferably 10% by volume to 40% by volume.

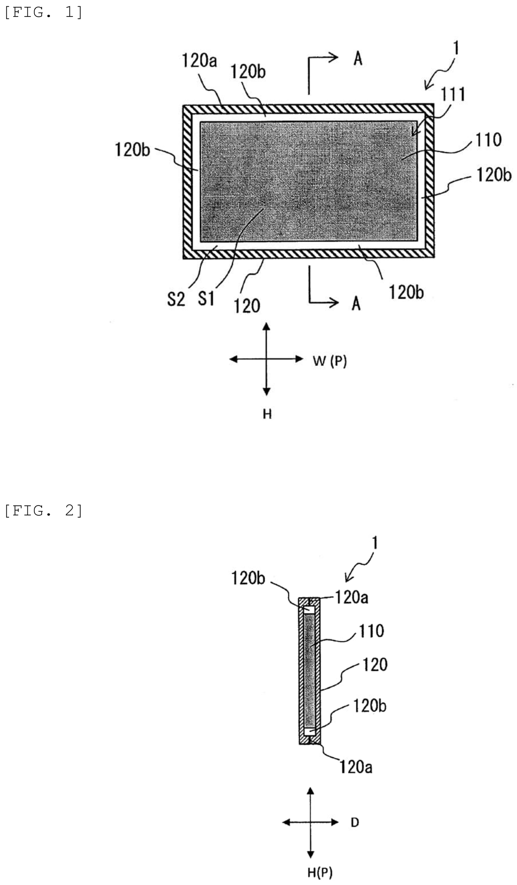

FIG. 1 shows a structure of an example of a partitioning member of the present invention. A front view of a partitioning member 1 is shown in FIG. 1. FIG. 2 shows a cross section of the right side surface of the partitioning member shown in FIG. 1, sectioned along an A-A line.

In the example shown in FIGS. 1 and 2, the partitioning member 1 has an overall shape of a flat plate or sheet having a height direction (H), a width direction (W), and a thickness direction (D). The partitioning member 1 has a thickness direction (D) and a plane direction (P) orthogonal to the thickness direction (D). The plane direction (P) includes the height direction (H) and the width direction (D) described above, and a plurality of diagonal directions between the height direction (H) and the width direction (D).

The partitioning member 1 is used to partition single cells constituting a battery assembly, or to partition a single cell and a member other than the single cell, in the thickness direction (D). The partitioning member 1 includes an encapsulating material 110, and is preferably formed into a plate or sheet shape by sealing the encapsulating material 110 in a casing material 120 having permeability.

The partitioning member 1 preferably has a thickness of 0.80 to 20 mm, more preferably 1.0 to 10 mm.

### [Encapsulating Material]

The encapsulating material 110 contains a porous body. The porous body contained in the encapsulating material 110 contains materials having moisture absorption properties, preferably a powdered inorganic material and a fibrous inorganic material. In the present invention, the "fibrous inorganic material" means an inorganic material having a shape whose long diameter is 100 times or more a short diameter, and the "powdered inorganic material" means an inorganic material having a shape whose long diameter is shorter than 100 times a short diameter. In particular, in the case of being fibrous, the "long diameter" means a fiber length, and the "short diameter" means a diameter of a cross-section orthogonal to the long diameter direction.

For example, the fibrous inorganic material is preferably at least one selected from the group consisting of paper, cotton sheets, polyimide fibers, aramid fibers, polytetrafluoroethylene (PTFE) fibers, glass fibers, rock wool, ceramic fibers, and bio-soluble inorganic fibers, and among these, it is particularly preferably at least one selected from the group consisting of glass fibers, rock wool, ceramic fibers, and bio-soluble inorganic fibers. Ceramic fibers are fibers mainly composed of silica and alumina (silica : alumina = 40 : 60 to 0 : 100), and specifically include silica-alumina fibers, mullite fibers, and alumina fibers.

The powdered inorganic material is preferably at least one selected from the group consisting of silica particles, alumina particles, calcium silicates, clay minerals, vermiculite, mica, cement, pearlite, fumed silica, and aerogel, and among these, it is particularly preferably at least one selected from the group consisting of silica particles, alumina particles, calcium silicates, and vermiculite. Among calcium silicates, xonotlite, tobermorite, wollastonite, and gyrolite are preferred, and gyrolite is particularly preferred. Gyrolite, which has a petal-like structure, retains a porous structure even when compressed and deformed, providing excellent liquid retention properties. Clay minerals include mainly magnesium silicate (including talc and sepiolite), montmorillonite, and kaolinite.

The porous body usually has a thermal conductivity of less than 0.20 [W/(m·K)] for the purpose of blocking heat transfer in case of abnormality occurring between single cells. In addition, the thermal conductivity is preferably less than 0.15 [W/(m·K)], more preferably less than 0.10 [W/(m·K)]. The lower limit is not particularly limited, but is preferably 0.001 [W/(m·K)] or more.

From the viewpoint of maintaining thermal insulation performance of the partitioning member 1, a ratio of a mass of moisture that the encapsulating material 110 can contain to a total mass of the encapsulating material is preferably 0.40 or less, more preferably 0.30 or less, and even more preferably 0.20 or less, in an environment of 23°C and 50% RH. The lower limit is not particularly limited, but is preferably 0.001 or more.

### [Casing Material]

It is preferable that the casing material 120 is not bonded to the encapsulating material 110. It is preferable that the encapsulating material 110 is sealed by the casing material 120. Here, the term "sealed" means that all sides of the casing material are sealed. In addition, it is preferable that the casing material 120 has a moisture-permeable property. A moisture permeability, which is a moisture-permeable property, of the casing material 120 is preferably 1.0 × 10⁻³ to 5.0 × 10¹ g/m²/day, more preferably 5.0 × 10⁻³ to 5.0 × 10⁰ g/m²/day, and even more preferably 1.0 × 10⁻² to 5.0 × 10⁻¹ g/m²/day.

The upper limit of the moisture permeability is preferably 5.0 × 10¹ g/m²/day, more preferably 1.0 × 10¹ g/m²/day, even more preferably 5.0 × 10⁰ g/m²/day, still more preferably 1.0 × 10⁰ g/m²/day, still more preferably 5.0 × 10⁻¹ g/m²/day, and still more preferably 1.0 × 10⁻¹ g/m₂/day; and the lower limit of the moisture permeability is preferably 1.0 × 10⁻³ g/m²/day, more preferably 5.0 × 10⁻³ g/m²/day, and even more preferably 1.0 × 10⁻² g/m²/day.

The moisture permeability indicates an amount of moisture that permeates 1 m² of a film in 24 hours, and can be measured based on JIS Z0208:1976.

The moisture permeability can be appropriately controlled by the components and thickness of a film. In general, the moisture permeability of metals is on the order of 10⁻⁵, and that of inorganic oxides and metal oxides is on the order of 10⁻³ to 10⁰.

It is preferable that the casing material 120 is a laminated sheet.

The laminated sheet may be formed by laminating layers such as, although the combination thereof is not particularly limited, a sealant resin layer (first resin layer), a reinforcement layer (second resin layer), a barrier layer, a substrate layer (third resin layer), and a protective resin layer (fourth resin layer), and may be applied to the casing material 120. These layers may be bonded together using an adhesive.

The barrier layer preferably includes at least one layer selected from the group consisting of an inorganic oxide layer and a metal oxide layer.

The laminated sheet according to one embodiment of the present invention includes a sealant resin layer and a barrier layer from the viewpoints of flexibility and heat resistance, and it is preferable to include at least one layer selected from the group consisting of a sealant resin layer, an inorganic oxide layer and a metal oxide layer.

From the viewpoint of imparting strength and scratch resistance, the laminated sheet according to another embodiment of the present invention includes, in order from the encapsulating material to the outside of the partitioning member, at least one selected from the group consisting of: (1) a sealant resin layer, a reinforcement layer, and a barrier layer; (2) a sealant resin layer, a barrier layer, and a protective resin layer; and (3) a sealant resin layer, a reinforcement layer, a barrier layer, and a protective resin layer.

In the partitioning member 1 of the present invention, the casing material 120 stores a liquid in an internal space thereof. For example, the encapsulating material 110 is sandwiched between two or two-folded barrier films each including a sealant resin layer, and a peripheral portion 120a of the casing material 120, which is in contact with the two sealant resin layers, is joined by heat-fusing or bonding to form a sealing portion.

It is preferable that the casing material 120 is flexible and capable of being deformed in response to external pressure such as expansion or contraction of single cells, but it may not be flexible.

The barrier film included in the casing material 120 includes a substrate layer and an inorganic oxide film or a metal oxide film formed on at least one surface of the substrate layer.

The substrate layer (third resin layer) is preferably a layer containing a resin. The type of the resin is not particularly limited, and examples thereof include polyolefin resins such as homopolymers or copolymers of ethylene, propylene, and butene, amorphous polyolefin resins such as cyclic polyolefins, polyester resins such as polyethylene terephthalate (PET) and polyethylene naphthalate (PEN), polyamide resins such as nylon 6, nylon 66, nylon 12, and copolymerized nylon, partially hydrolyzed ethylene-vinyl acetate copolymers (EVOH), polyimide resins, polyetherimide resins, polysulfone resins, polyethersulfone resins, polyetheretherketone resins, polycarbonate resins, polyvinyl butyral resins, polyarylate resins, fluororesins, acrylic resins, and biodegradable resins. Among these, polyester resins are preferred, and polyethylene terephthalate (PET) or polyethylene naphthalate (PEN) is particularly preferred, from the viewpoint of heat resistance when forming an oxide film.

There are no particular limitations on the thickness of the substrate layer, but from the viewpoint of durability, the thickness is preferably 5 µm or more, more preferably 10 µm or more; and in order to ensure flexibility, it is preferably 200 µm or less, more preferably 100 µm or less, even more preferably 50 µm or less, and particularly preferably 30 µm or less.

The barrier layer is preferably at least one layer selected from an inorganic oxide layer and a metal oxide layer. By providing the barrier layer, it is possible to impart a function of controlling moisture and oxygen permeability. Examples of materials for forming the inorganic oxide film include, but are not particularly limited to, silicon oxide, silicon oxycarbide, silicon oxynitride, silicon oxycarbonitride, aluminum oxide, aluminum oxycarbide, and aluminum oxynitride. Examples of materials for forming the metal oxide film include aluminum, copper, titanium, and palladium. The inorganic oxide film and the metal oxide film may each have a single-layer structure or a multi-layer structure. In this case, each oxide film layer may be formed from the same material or from different materials.

There are no particular limitations on the thickness of at least one layer selected from an inorganic oxide layer and a metal oxide layer, but in order to improve barrier properties, the thickness is preferably 0.01 µm or more, more preferably 0.02 µm or more. Meanwhile, in order to prevent cracking or the like, the thickness is preferably 1 µm or less, more preferably 0.5 µm or less, and even more preferably 0.1 µm or less.

There are no particular limitations on the method of forming an inorganic oxide film or a metal oxide film on a substrate layer, and they may be formed by any method depending on the material used. Specifically, any method such as vapor deposition or coating can be used. Among these, the vapor deposition method is preferred because it can produce a uniform thin film with high barrier properties. Examples of the vapor deposition method include physical vapor deposition (PVD), chemical vapor deposition (CVD), and atomic layer deposition (ALD). Examples of the physical vapor deposition method include vacuum deposition, ion plating, and sputtering; and examples of the chemical vapor deposition method include plasma CVD using plasma and catalytic chemical vapor deposition (Cat-CVD) using a heating catalyst to thermally decompose material gases. Among these, the vacuum deposition method is particularly preferred because it enables high-speed and uniform film formation.

The sealant resin layer (second resin layer) included in the casing material 120 is a layer containing at least one of a thermosetting resin and a thermoplastic resin. At least one of a thermosetting resin and a thermoplastic resin can be used for the sealant resin layer, and a thermoplastic resin is particularly preferred. Examples of the sealant resin layer include, but are not particularly limited to, polyolefin resins such as homopolymers or copolymers of ethylene, propylene, and butene, amorphous polyolefin resins such as cyclic polyolefins, polyester resins such as polyethylene terephthalate (PET) and polyethylene naphthalate (PEN), polyvinyl butyral resins, acrylic resins, and biodegradable resins. Among these, it is preferable to use at least one selected from the group consisting of polyolefin resins such as high-pressure low-density polyethylene (LDPE), linear low-density polyethylene (LLPDE), and polypropylene resin from the viewpoint of low-temperature melting properties for obtaining a function of releasing a liquid inside the casing material to the outside during abnormal heat generation. Furthermore, from the viewpoint of long-term storage stability within the temperature range in which the partitioning member in the battery assembly is normally used and from the viewpoint of versatility, it is more preferable to use a non-stretched polypropylene resin.

The moisture permeability of the sealant resin layer is not particularly limited, but is preferably 100 g/m²/day or less, more preferably 50 g/m²/day or less, and even more preferably 20 g/m²/day or less, in an environment of 40°C and 90% RH. The lower the moisture permeability of the sealant resin layer, the more the release of water vapor permeating through the sealant resin can be suppressed, and thus the heat transfer performance of the partitioning member can be maintained over a long period of time. The lower limit of the moisture permeability of the sealant resin layer is not particularly limited, but is usually 1 g/m²/day or more.

There are no particular limitations on the thickness of the sealant resin layer, but from the viewpoint of ensuring sealing properties, the thickness is preferably 10 µm or more, more preferably 20 µm or more, and even more preferably 30 µm or more. In order to ensure flexibility, the thickness of the sealant resin layer is preferably 120 µm or less, more preferably 100 µm or less, and even more preferably 80 µm or less.

The reinforcement layer (second resin layer) is a layer containing a resin. The type of the resin is not particularly limited, and examples thereof include polyolefin resins such as homopolymers or copolymers of ethylene, propylene, and butene, amorphous polyolefin resins such as cyclic polyolefins, polyester resins such as polyethylene terephthalate (PET) and polyethylene naphthalate (PEN), polyamide resins such as nylon 6, nylon 66, nylon 12, and copolymerized nylon, partially hydrolyzed ethylene-vinyl acetate copolymers (EVOH), polyimide resins, polyetherimide resins, polysulfone resins, polyethersulfone resins, polyetheretherketone resins, polycarbonate resins, polyvinyl butyral resins, polyarylate resins, fluororesins, acrylic resins, and biodegradable resins. Among these, polyamide resins such as nylon 6 and polyester resins such as polyethylene terephthalate are preferred from the viewpoint of imparting heat resistance and mechanical strength to the casing material, and polyamide resins such as nylon 6 are even more preferred from the viewpoint of improving pinhole resistance of the metal layer. The reinforcement layer may be a single layer or a laminate of two or more layers. In the case of two or more layers, the layers may be selected from different resin layers or the same resin layer.

There are no particular limitations on the thickness of the reinforcement layer, but from the viewpoint of imparting mechanical strength, the thickness is preferably 5 µm or more, more preferably 10 µm or more, and even more preferably 15 µm or more. In order to ensure flexibility, the thickness is preferably 100 µm or less, more preferably 50 µm or less, and even more preferably 30 µm or less.

The protective resin layer (fourth resin layer) is a layer containing a resin. The type of the resin is not particularly limited, and examples thereof include polyolefin resins such as homopolymers or copolymers of ethylene, propylene, and butene, amorphous polyolefin resins such as cyclic polyolefins, polyester resins such as polyethylene terephthalate (PET) and polyethylene naphthalate (PEN), polyamide resins such as nylon 6, nylon 66, nylon 12, and copolymerized nylon, partially hydrolyzed ethylene-vinyl acetate copolymers (EVOH), polyimide resins, polyetherimide resins, polysulfone resins, polyethersulfone resins, polyetheretherketone resins, polycarbonate resins, polyvinyl butyral resins, polyarylate resins, fluororesins, acrylic resins, and biodegradable resins. Among these, polyamide resins such as nylon 6 and polyester resins such as polyethylene terephthalate are preferred from the viewpoint of imparting heat resistance and mechanical strength to the casing material. The protective resin layer may be a single layer or a laminate of two or more layers. In the case of two or more layers, the layers may be selected from different resin layers or the same resin layer.

The thickness of the protective resin layer is not particularly limited, but is preferably 5 µm or more, more preferably 10 µm or more, and even more preferably 15 µm or more, from the viewpoint of imparting mechanical strength. In order to ensure flexibility, the thickness is preferably 100 µm or less, more preferably 50 µm or less, and even more preferably 30 µm or less.

The thickness of the casing material 120 is not particularly limited, but is preferably 20 µm or more, more preferably 30 µm or more, and even more preferably 40 µm or more, from the viewpoint of mechanical strength in consideration of the thickness of each of the layers described above. In order to ensure flexibility, the thickness of the casing material 120 is preferably 220 µm or less, more preferably 150 µm or less, and even more preferably 110 µm or less.

The moisture permeability of the casing material 120 in an environment of 40°C and 90% RH is preferably 1.0 × 10⁻³ to 5.0 × 10¹ g/m²/day. From the viewpoint of retaining as much of the absorbed liquid as possible in the porous body, the moisture permeability is more preferably 1.0 × 10⁻² to 2.0 × 10¹ g/m²/day, even more preferably 5.0 × 10⁻² to 1.0 × 10¹ g/m²/day.

In the example shown in FIG. 1, a casing material 120 is provided with a sealing portion 120a that seals a peripheral portion thereof, and an encapsulating material 110 is accommodated in an internal space 111 formed in the casing material 120 by being sealed by the sealing portion 120a. In the example shown in FIG. 1, a gap 120 b is provided between the sealing portion 120 a and the encapsulating material 110 in the internal space 111. In other words, the internal space 111 includes a first area S1 where the casing material 120 and the encapsulating material 110 overlap, and a second area S2 where the casing material 120 and the encapsulating material 110 do not overlap, in a plan view of the front of a partitioning member 1. However, the gap 120b is not necessarily required. The inner surfaces of the casing material 120 may be in contact with each other when no fluid (gas or liquid) is present in the gap 120b. In the present invention, the volume of the internal space 111 is defined as the product of the area of the internal space 111 and the thickness of the encapsulating material 110. The encapsulating material does not have to be disposed in the center of the internal space, and it does not have to be parallel to the casing material.

One means of imparting permeability to the casing material 120 is to form the casing material 120 using a material having permeability. Another means is to form the casing material 120 using a material having gas barrier properties and seal the encapsulating material 110 therein to partially provide a ventilation portion in the casing material 120.

### <Method of Using Partitioning Member>

The aspects of the present invention include absorbing moisture in the atmospheric air into the partitioning member having the configuration described above. In order to suppress humidity inside a battery pack, it is preferable to (1) bring the partitioning member into contact with moisture, (2) allow the moisture that has come into contact with the partitioning member to permeate into the partitioning member, and (3) retain the permeated moisture inside the partitioning member.

From the perspective of (1), it is preferable to bring moisture into contact with the partitioning member at a relative humidity of 5% or more.

From the perspective of (2), it is more preferable that the partitioning member is configured as described above to form a moisture concentration gradient between the inside and outside of the partitioning member, thereby allowing moisture to permeate.

From the perspective of (3), it is preferable that the moisture absorbed in an environment of 40°C and 90% RH for 15 days is retained in an environment of 60°C and 10% RH for 4 hours or more, more preferably for 24 hours or more.

The higher the moisture permeability of the casing material, the more moisture can permeate from the outside and the more moisture can be released from the inside. By controlling the components and thickness, it is possible to adjust the desired moisture retention time.

### <Battery Assembly>

The following is a description of a battery assembly to which the partitioning member 1 is applied. The battery assembly is applied to, for example, battery packs installed in electric vehicles (EVs), hybrid electric vehicles (HEVs), plug-in hybrid electric vehicles (PHEVs), electric heavy machinery, electric motorcycles, electric assistive bicycles, ships, aircraft, trains, uninterruptible power supplies (UPSs), home energy storage systems, and power system stabilization battery systems using renewable energy such as wind, solar, tidal, and geothermal power. The battery assembly can also be used as a power source that supplies electric power to devices other than the EVs described above.

### [Single Cell]

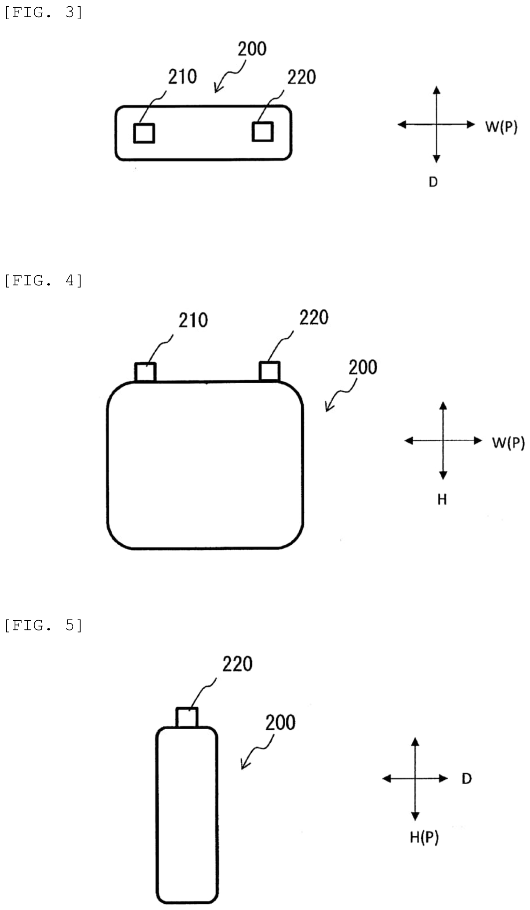

FIG. 3 is a plan view showing an example of a single cell constituting a battery assembly, FIG. 4 is a front view of the single cell shown in FIG. 3, and FIG. 5 is a right side view of the single cell. A single cell 200 is formed in a rectangular parallelepiped shape having a height direction (H), a width direction (W), and a thickness direction (D), and is provided with terminals 210 and 220 on an upper surface thereof. The single cell 200 is, for example, a lithium-ion secondary battery including positive and negative electrodes that can absorb and release lithium ions, and an electrolyte. In addition to the lithium-ion secondary battery, it can be applied to secondary batteries such as a lithium-ion all-solid-state battery, a nickel-metal hydride battery, a nickel-cadmium battery, and a lead-acid battery.

### [Battery Assembly]

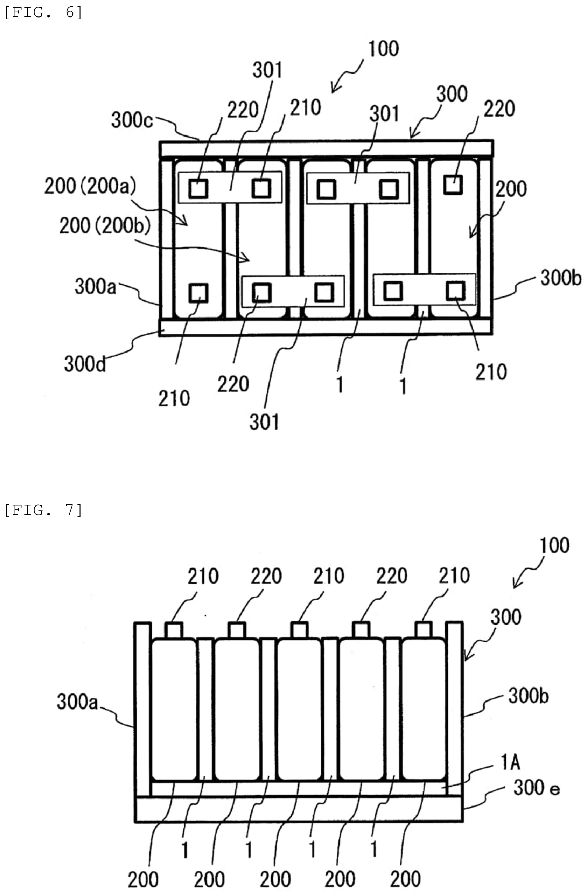

FIG. 6 is a top view of a battery assembly 100 formed using a plurality of single cells 200, and FIG. 7 is a schematic side view of the battery assembly 100 shown in FIG. 6 with a side panel 300d removed. In FIGS. 6 and 7, the battery assembly 100 includes a housing 300 and a plurality of single cells 200 accommodated in the housing 300. The housing 300 has a bottom panel 300e and side panels 300a, 300b, 300c, and 300d standing along the outer periphery of the bottom panel 300e. Five single cells 200 are shown in FIGS. 6 and 7 as an example, but the number of single cells can be selected appropriately.

In the housing 300, the plurality of single cells 200 are arranged in the thickness direction, and the partitioning member 1 described above is disposed between the single cells 200. The positive terminal (e.g., terminal 210) and the negative terminal (e.g., terminal 220) of the single cells 200, which are adjacent (opposed) to each other through the partitioning member 1, are electrically connected in series by a bus bar 301, so that the battery assembly 100 outputs a predetermined electric power. As shown in FIG. 7, the battery assembly 100 includes a partitioning member 1A disposed between an upper surface of the bottom panel 300e and each single cell 200 in the housing 300. The partitioning member 1A has the same configuration as that of the partitioning member 1.

### EXAMPLES

The following is a description of Examples according to the present invention. The present invention is not limited to these Examples.

### (Example 1)

As a casing material 120, a barrier film (BR-PET manufactured by Toray Advanced Film Co., Ltd., product number: 1517, thickness: 12 µm) in which aluminum oxide was formed on a PET substrate by vapor deposition, and a film (CPP manufactured by TOYOBO Co., Ltd., product number: P1153, thickness: 60 µm) composed of non-stretched polypropylene as a sealant resin layer composed of non-stretched polypropylene were laminated using a two-component curing polyurethane adhesive layer having a thickness of 5 µm, with the aluminum vapor deposition side in contact with the adhesive layer, to obtain a sealant resin layer-laminated barrier film having a thickness of 77 µm and a moisture permeability of 0.2 g/m²/day (environmental conditions: 40°C, 90% RH).

The casing material 120 was cut into a rectangular shape having a length of 100 mm and a width of 160 mm, and two of the cut films were stacked together and heat-fused (at a temperature of 165°C for 3 seconds) on three sides with a sealing width of 1 cm.

A porous body (fiber sheet carrying a powdered inorganic material, thickness: 0.9 mm, density: 0.29 g/cm³, dry weight: 2.35 g) cut into a rectangular shape having a length of 6 cm and a width of 12 cm as an encapsulating material 110 was accommodated from the unfused side of the casing material 120, the unfused side was sealed by heat-fusing with a sealing width of 1 cm, and the excess outer periphery was cut off to produce a partitioning member having a length of 90 mm, a width of 150 mm, a peripheral sealing width of 5 mm, and a thickness of 1.1 mm.

The partitioning member had a volume ratio of the space not occupied by the encapsulating material relative to 100% by volume of the inner space of the casing material under atmospheric pressure being 34% by volume.

### [Weight Evaluation 1]

The resulting partitioning member was stored in a constant temperature and humidity environment of 23°C and 50% RH for one day, and the weight was measured. Subsequently, the partitioning member was stored in a constant temperature and humidity chamber maintained at 40°C and 90% RH, and the amount of moisture absorbed was evaluated from the difference in weight before and after storage in the 40°C and 90% RH environment. The storage time in the 40°C and 90% RH environment was 15 days. The results obtained are shown in Table 1.

### [Weight Evaluation 2]

Immediately after the weight evaluation 1, the partitioning member was stored in a constant temperature and humidity chamber maintained at 60°C and 10% RH, and the time required for the moisture inside the partitioning member to be released to the outside and for the weight to fall below the weight before the weight evaluation 1 was measured. The results obtained are shown in Table 1.

### (Example 2)

As a casing material 120, a barrier film (BR-PET manufactured by Toray Advanced Film Co., Ltd., product number: 1517, thickness: 12 µm) in which aluminum oxide was formed on a PET substrate by vapor deposition, and a film (CPP manufactured by TOYOBO Co., Ltd., product number: P1153, thickness: 60 µm) composed of non-stretched polypropylene as a sealant resin layer composed of non-stretched polypropylene were laminated using a two-component curing polyurethane adhesive layer having a thickness of 5 µm, with the aluminum vapor deposition side in contact with the adhesive layer, to obtain a sealant resin layer-laminated barrier film having a thickness of 77 µm and a moisture permeability of 0.2 g/m²/day (environmental conditions: 40°C, 90% RH).

The casing material 120 was cut into a rectangular shape having a length of 100 mm and a width of 160 mm to prepare two cut films.

Next, a porous body (fiber sheet carrying a powdered inorganic material, thickness: 0.9 mm, density: 0.29 g/cm³, dry weight: 2.35 g) cut into a rectangular shape having a length of 6 cm and a width of 12 cm as a porous body to be contained in the encapsulating material 110 was sandwiched between the two casing materials 120. In this process, the two casing materials 120 were arranged such that each sealant resin layer faced inward.

The casing materials and the encapsulating material were fused together over their entire surfaces using a roll laminator set at a roll temperature of 165°C, and the excess outer periphery was cut off to produce a partitioning member having a length of 90 mm, a width of 150 mm, and a thickness of 1.1 mm.

The partitioning member had a volume ratio of the space not occupied by the encapsulating material relative to 100% by volume of the inner space of the casing material under atmospheric pressure being 5% by volume.

The partitioning member was subjected to the weight evaluations in the same manner as in Example 1. The results obtained are shown in Table 1.

### (Example 3)

A partitioning member was produced in the same manner as in Example 1, except that, as a casing material 120, a PET film having a thickness of 12 µm and a sealant resin layer composed of non-stretched polypropylene were laminated using a two-component curing polyurethane adhesive layer having a thickness of 5 µm to obtain a sealant resin layer-laminated film having a thickness of 77 µm and a moisture permeability of 20 g/m²/day (environmental conditions: 40°C, 90% RH).

The partitioning member had a volume ratio of the space not occupied by the encapsulating material relative to 100% by volume of the inner space of the casing material under atmospheric pressure being 34% by volume.

The partitioning member was subjected to the weight evaluations in the same manner as in Example 1. The results obtained are shown in Table 1.

### (Comparative Example 1)

A heat insulation material (fiber sheet carrying a powdered inorganic material, thickness: 0.9 mm, density: 0.29 g/cm³, dry weight: 2.35 g) cut into a rectangular shape having a length of 6 cm and a width of 12 cm was used as a partitioning member without sealing the periphery with a casing material, and the partitioning member was subjected to the weight evaluations in the same manner as in Example 1. The results obtained are shown in Table 1.

**[Table 1]**

| | Partitioning member configuration | | Water absorption amount in 40°C and 90% RH environment [mg] | Water absorption amount / encapsulating material amount [%] | Drying time in 60°C and 10% RH environment [hr] |
|---|---|---|---|---|---|
| | Casing material | Interface between casing material and encapsulating material | | | |
| Example 1 | aluminum-evaporated PET / sealant resin | not bonded | 93.0 | 4.0 | 300 |
| Example 2 | aluminum-evaporated PET / sealant resin | bonded | 79.8 | 3.4 | 257 |
| Example 3 | PET / sealant resin | not bonded | 126.2 | 5.4 | 4.1 |
| Comparative Example 1 | no casing material | - | < 1 | < 0.1 | < 2 |

According to the evaluation results in Examples and Comparative Example described above, it was confirmed that the partitioning members in Examples 1 to 3, which had casing materials, were capable of absorbing moisture. During the test period for each Example, there was a tendency for water absorption to reach saturation for Example 3, while there was a tendency for further water absorption to be possible for Examples 1 and 2, and it was considered that all were capable of absorbing moisture to the same extent.

Meanwhile, in Examples 1 and 2, which used casing materials having high moisture vapor barrier properties composed of metal oxide film-formed substrate layers, it was confirmed that because the release rate of absorbed moisture was slow, the moisture was retained in the partitioning members for a long period of time, thereby allowing the humidity to be controlled for a longer period of time.

From the evaluation results, it was found that by using the partitioning member in each Example, the partitioning member absorbed moisture from the outside and retained the moisture inside for a certain period of time, thereby allowing the humidity in the battery assembly to be controlled by the partitioning member.

It was also confirmed that the partitioning member in Example 1, which had no bonded surface between the casing material and the encapsulating material, had better moisture absorption than the partitioning member in Example 2, which had a bonded surface therebetween. This is thought to be due to the presence of an air layer at the interface between the casing material and the encapsulating material, and also due to the increased surface area of the encapsulating material, which increases the area available for moisture absorption.

The configurations of the partitioning member and the battery assembly of the present invention described above are examples, and can be appropriately modified based on design requirements or the like without departing from the gist of the present invention.

In the present description, when expressed as "X to Y" (X and Y are any numbers), meaning of "X or more and Y or less" and meaning of "preferably larger than X" and "preferably smaller than Y" are included unless otherwise specified. Further, when expressed as "X or more" (X is any number), meaning of "preferably more than X" is included unless otherwise specified, and when expressed as "Y or less" (Y is any number), meaning of "preferably less than Y" is included unless otherwise specified.

### EXPLANATIONS OF LETTERS OR NUMERALS

- 1: Partitioning member
- 100: Battery assembly
- 110: Encapsulating material
- 120: Casing material
- 200: Single cell
- 300: Housing

## Claims

1. A partitioning member comprising a casing material and an encapsulating material,
the encapsulating material comprising a porous body,
the casing material having a moisture permeability of 1.0 × 10⁻³ to 5.0 × 10¹ g/m²/day in an environment of 40°C and 90% RH.

2. The partitioning member according to claim 1, wherein the casing material and the encapsulating material are not bonded together.

3. The partitioning member according to claim 1, wherein the partitioning member has a space that is not occupied by the encapsulating material in an inner space of the casing material under atmospheric pressure.

4. The partitioning member according to claim 1, wherein a volume ratio of the space not occupied by the encapsulating material to 100% by volume of the inner space of the casing material is 10% by volume to 70% by volume.

5. The partitioning member according to claim 1, wherein the partitioning member is sealed by the casing material.

6. The partitioning member according to any one of claims 1 to 3, wherein the partitioning member absorbs moisture in atmospheric air.

7. The partitioning member according to any one of claims 1 to 3, wherein a ratio of a mass of moisture contained in the encapsulating material to a total mass of the encapsulating material is 0.40 or less.

8. The partitioning member according to any one of claims 1 to 3, wherein the porous body comprises a fibrous inorganic material and a powdered inorganic material.

9. The partitioning member according to any one of claims 1 to 3, wherein the casing material comprises a thermoplastic resin.

10. The partitioning member according to any one of claims 1 to 3, wherein the casing material comprises at least one layer selected from the group consisting of an inorganic oxide layer and a metal oxide layer.

11. The partitioning member according to any one of claims 1 to 3, wherein the casing material comprises at least one layer selected from the group consisting of an inorganic oxide layer and a metal oxide layer, and the layer has a thickness of 0.01 to 1 µm.

12. A battery assembly comprising the partitioning member according to any one of claims 1 to 3 and a single cell.

13. A method of using the partitioning member according to any one of claims 1 to 3, comprising bringing the partitioning member into contact with moisture at a relative humidity of 5% or more.

14. The method of using the partitioning member according to claim 13, comprising passing moisture through the partitioning member.

15. The method of using the partitioning member according to claim 13, wherein the partitioning member, after absorbing moisture for 15 days in an environment of 40°C and 90% RH, retains the absorbed moisture for 24 hours or more in an environment of 60°C and 10% RH.
